# EUROPEAN PATENT APPLICATION

(11) **EP 4 650 707 A1**
(43) Date of publication of application: **19.11.2025**
(21) Application number: 24811336.7
(22) Date of filing: 14.05.2024
(51) Int. Cl.: G01B 11/06, G01B 11/02

(54) **THICKNESS MEASUREMENT SYSTEM**

(30) Priority: 23.05.2023 KR 20230066356
(71) Applicant: LG Energy Solution, Ltd., Seoul 07335 (KR)
(72) Inventor: KOO, Sang Hyun, Daejeon 34122 (KR); KIM, Seok Jin, Daejeon 34122 (KR); LEE, Ji Hoon, Daejeon 34122 (KR)
(74) Representative: Plasseraud IP
(86) International application number: PCT/KR2024/006594
(87) International publication number: WO 2024/242397

(57) **Abstract**

The present invention relates to a thickness measurement system, and more particularly, to a thickness measurement system which is capable of significantly reducing measurement errors due to a positional relationship between an object to be measured and a sensor when measuring a thickness of a pouch, and in particular, significantly reducing thickness measurement errors at a corner portion of a pouch, which is provided as a curved surface having various curvatures.

A thickness measurement system according to the present invention includes a stage device comprising a seating part, on which an object, of which a thickness is to be measured, is seated, and a moving part configured to move the seating part, a displacement sensor device comprising a first displacement sensor disposed at one side of the object to measure a distance up to the object and a second displacement sensor disposed at the other side of the object to measure a distance up to the object, and a processing device configured to obtain a thickness value of the object based on the measured values of the first displacement sensor and the second displacement sensor, wherein the displacement sensor device performs the measurement only when an incident angle, which is an angle between the light emitted from the first displacement sensor or the second displacement sensor and a normal line perpendicular to a surface of the object to be measured, is within a predetermined angle, and does not perform the measurement when the incident angle is out of the predetermined angle.

## Description

### TECHNICAL FIELD

### CROSS-REFERENCE TO RELATED APPLICATION

The present application claims the benefit of the priority of Korean Patent Application No. 10-2023-0066356, filed on May 23, 2023, which is hereby incorporated by reference in its entirety.

### TECHNICAL FIELD

The present invention relates to a thickness measurement system, and more particularly, to a thickness measurement system which is capable of significantly reducing measurement errors due to a positional relationship between an object to be measured and a sensor when measuring a thickness of a pouch, and in particular, significantly reducing thickness measurement errors at a corner portion of a pouch, which is provided as a curved surface having various curvatures.

### BACKGROUND ART

Secondary batteries that are repeatedly chargeable and dischargeable may be divided into cylindrical secondary batteries, prismatic secondary batteries, pouch type secondary batteries, etc., depending on their structures and manufacturing methods. Among these, the pouch type secondary batteries are manufactured by accommodating an electrode assembly within a pouch sheet and then sealing the pouch sheet. When compared to other types of secondary batteries, the pouch type secondary batteries have a simple structure and large capacity per unit volume and thus are widely used in vehicle batteries, energy storage devices, etc.

In more details, the pouch type secondary batteries may be generally manufactured by following processes. After a cup having a recessed shape is formed in the pouch sheet, an electrode assembly is accommodated in the cup, and then, the pouch sheet is folded so that one area of the pouch sheet covers the electrode assembly to form a sealing part that seals a circumference of the electrode assembly.

Such a pouch type secondary battery is provided with a protruding electrode lead so that the pouch type secondary battery is electrically connected to an external component. Here, the sealing part is provided to cover the electrode lead.

In order to assemble the pouch battery, a pouch case in which a cup part is formed to match the shape of the electrode assembly is required so that the electrode assembly, in which a negative electrode, a separator, a positive electrode, and a separator are alternately stacked, is inserted into the pouch case. Here, the cup part may be formed using a mold (pouch forming device).

In this case, if a thickness of the pouch becomes thinner due to the forming of the pouch, there is a risk of cracking, and thus, it is necessary to manage the thickness of the pouch so that the thickness does not become thinner than an appropriate value. Thus, there is a need to accurately measure the thickness of the pouch.

However, in the related art, when measuring the thickness of the pouch, there was a problem in that accurate thickness measurement is difficult due to a large measurement error due to a positional relationship between a surface of the pouch, which is an object to be measured, and a sensor. This problem occurred more significantly in a curved portion of the pouch.

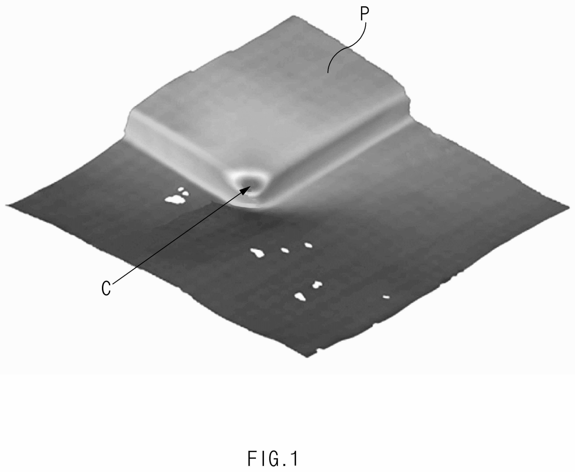

FIG. 1 is a perspective view of a corner portion in a pouch according to the related art. Referring to FIG. 1, a pouch corner portion disposed at a position corresponding to a vertex of the pouch having a rectangular parallelepiped shape, which is illustrated in FIG. 1, may be a portion formed with a curved surface having various curvatures and thus a portion at which a large thickness measurement error occurs.

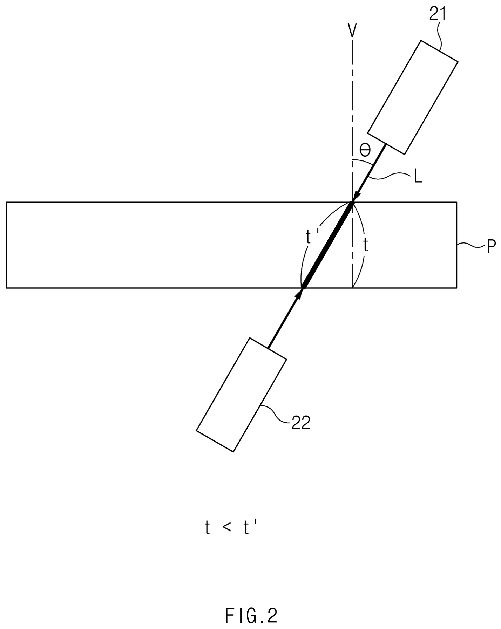

FIG. 2 is a cross-sectional view illustrating a state in which a thickness measurement sensor measures a thickness of the pouch according to the related art. Referring to FIG. 2, when a thickness is measured using a thickness measurement device according to the related art, if light emitted from the thickness measurement sensor reaches the pouch at an angle, a thickness error may occur.

A principle by which the thickness measurement device measures a thickness is as follows. Each of upper and lower displacement sensors emits light, and after the emitted light collides with the surface of the pouch, the light returns to each displacement sensor. In this process, a distance between each displacement sensor and the surface of the pouch is measured. That is, all of the distance between the upper displacement sensor and the pouch and the distance between the lower displacement sensor and the pouch may be obtained. In addition, since a distance between the upper displacement sensor and the lower displacement sensor is a fixed known value, the thickness of the pouch may be obtained by sequentially subtracting the distance from the upper displacement sensor to the pouch and the distance from the lower displacement sensor to the pouch from the distance between the two sensors. Since the principle of obtaining the thickness of the object using the displacement sensor is already known in the industry, and thus, detailed descriptions will be omitted.

Referring to FIG. 2, if an incident angle, which is an angle between a normal vector V perpendicular to a surface of an object pouch and light emitted from the a displacement sensor, is θ, and a thickness measured by the displacement sensor is t', the measured value t' is measured as a value greater than an actual thickness of the pouch.

In other words, a relationship t'=t/cosθ is established. Particularly, the errors are more likely to occur at corner portions of the pouch at positions corresponding to vertexes of the rectangular parallelepiped pouch. Since the corner portion of the pouch at each of the positions has a curved surface having large and various curvatures, the corner portion is a portion at which more measurement errors in thickness occur.

However, the pouch corner portion at this position is a portion that is stretched and molded to have the thinnest thickness. Thus, since the pouch corner portion at this position is a portion at which cracks are particularly likely to occur, there is a greater need to solve this problem of the thickness measurement error.

### DISCLOSURE OF THE INVENTION

### TECHNICAL PROBLEM

The prevent invention is invented to solve the above problem, and an object of the present invention to provide a thickness measurement system which is capable of significantly reducing measurement errors due to a positional relationship between an object to be measured and a sensor when measuring a thickness of a pouch, and in particular, significantly reducing thickness measurement errors at a corner portion of a pouch, which is provided as a curved surface having various curvatures.

### TECHNICAL SOLUTION

A thickness measurement system according to the present invention includes a stage device comprising a seating part, on which an object, of which a thickness is to be measured, is seated, and a moving part configured to move the seating part, a displacement sensor device comprising a first displacement sensor disposed at one side of the object to measure a distance up to the object and a second displacement sensor disposed at the other side of the object to measure a distance up to the object, and a processing device configured to obtain a thickness value of the object based on the measured values of the first displacement sensor and the second displacement sensor, wherein the displacement sensor device performs the measurement only when an incident angle, which is an angle between the light emitted from the first displacement sensor or the second displacement sensor and a normal line perpendicular to a surface of the object to be measured, is within a predetermined angle, and does not perform the measurement when the incident angle is out of the predetermined angle.

The first displacement sensor and the second displacement sensor may be disposed at one side and the other side of a curved surface, respectively, to measure a point of the curved surface of the object.

At least one of the first displacement sensor or the second displacement sensor may include a light receiving lens configured to receive the reflected light reflected from the surface of the object, and a sensor body on which the light receiving lens is mounted and into the light passing through the light receiving lens is incident, wherein, when the incident angle is within the predetermined angle, the reflected light may be incident into the light receiving lens and the sensor body, and when the incident angle is out of the predetermined angle, the reflected light may not be incident into the light receiving lens and the sensor body.

The predetermined angle may become smaller as a diameter of the light receiving lens decreases.

The predetermined angle may have a value between 0° and 1° (degree).

The processing device may obtain the thickness value of the object only when the incident angle is within the predetermined angle and do not obtain the thickness value of the object when the incident angle is out of the predetermined angle.

The thickness measurement system may further include a sensor gauge configured to move at least one of the first displacement sensor or the second displacement sensor upward or downward.

The moving part may include a linear moving part configured to move the seating part in x-axis, y-axis, and z-axis directions, which are three axes orthogonal to each other in a three-dimensional space.

The moving part may include a posture control panel having one side connected to the seating part and the other side extending in a direction away from the displacement sensor device, and the linear moving part may be connected to the posture control panel to move the posture control panel in the x-axis, the y-axis, and z-axis directions so that the seating part moves in the x-axis, y-axis, and z-axis directions.

The linear moving part may include a pillar portion connected to the other side of the posture control panel to support the other side, an x-axis gauge comprising a screw structure and configured to move the pillar portion to the x-axis, a y-axis gauge comprising a screw structure and configured to move the pillar portion to the y-axis, and a z-axis gauge comprising a screw structure and configured to move the pillar portion to the z-axis.

The moving part may include a rotational moving part configured to rotate and move the seating part in the three-dimensional space.

The moving part may include a posture control panel having one side connected to the seating part and the other side extending in a direction away from the displacement sensor device, and the rotational moving part may be connected to the posture control panel to rotate and move the seating part as the posture control panel rotates and moves.

The rotational moving part may include a pillar portion connected to the other side of the posture control panel to support the other side and having a square top surface facing the posture control panel, a first gauge installed on the pillar portion and configured to move the posture control panel upward or downward at a point corresponding to one corner portion of the square shape, and a second gauge installed on the pillar portion and configured to move the posture control panel upward or downward at a point corresponding to a corner portion opposite to the position, at which the first gauge is installed, in the square shape.

### ADVANTAGEOUS EFFECTS

The thickness measurement system may significantly reduce the measurement errors due to the positional relationship between the object to be measured and the sensor when measuring the thickness of the pouch, and in particular, significantly reduce the thickness measurement errors at the corner portion of the pouch, which is provided as the curved surface having the various curvatures.

### BRIEF DESCRIPTION OF THE DRAWINGS

FIG. 1 is a perspective view of a corner portion in a pouch according to the related art.
FIG. 2 is a cross-sectional view illustrating a state in which a thickness measurement sensor measures a thickness of the pouch according to the related art.
FIG. 3 is a perspective view of a thickness measurement system according to Embodiment 1 of the present invention.
FIG. 4 is an enlarged perspective view of a portion A of FIG. 3.
FIG. 5 is a cross-sectional view illustrating a state in which light emitted from a displacement sensor is incident vertically onto a surface of an object.
FIG. 6 is a cross-sectional view illustrating a state in which a thickness value of a pouch is measured in the state of FIG. 5.
FIG. 7 is a cross-sectional view illustrating a state in which the light emitted from the displacement sensor is incident obliquely onto the surface of the object.
FIG. 8(a) is a perspective view illustrating a state in which a moving part moves a seating part along an x-axis. FIG. 8(b) is a conceptual view illustrating a process of searching a position of a pouch corner portion while the seating part moves along the x-axis.
FIG. 9(a) is a perspective view illustrating a state in which a moving part moves a seating part along an x-axis. FIG. 9(b) is a conceptual view illustrating a process of searching a position of the pouch corner portion while the seating part moves along a y-axis.
FIG. 10 is a perspective view of a thickness measurement system according to Embodiment 2 of the present invention.
FIG. 11 is a perspective view illustrating a state when viewing a rotational moving part from a lower side of a posture control panel of the thickness measurement system according to Embodiment 2 of the present invention.
FIG. 12 is a conceptual view illustrating a principle of measuring the thickness of the pouch corner portion while the seating part rotatably moves by the rotational moving part.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

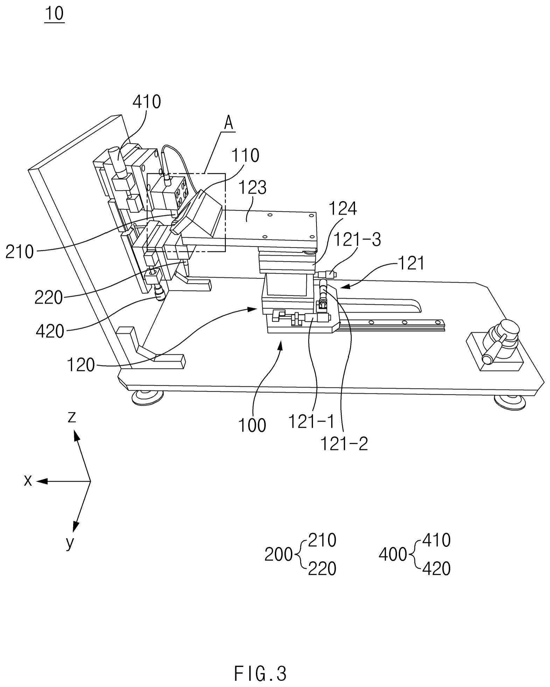

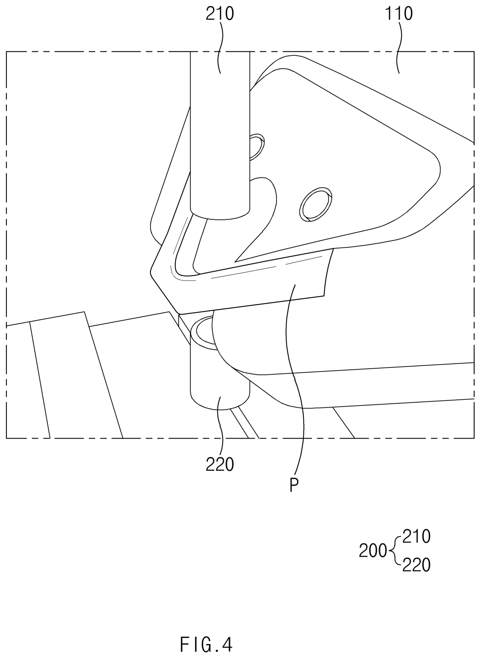

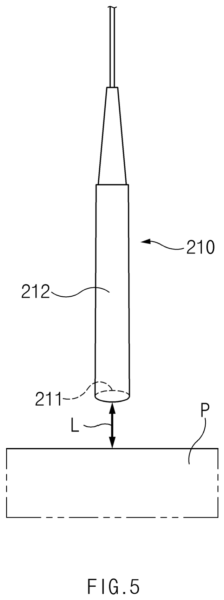

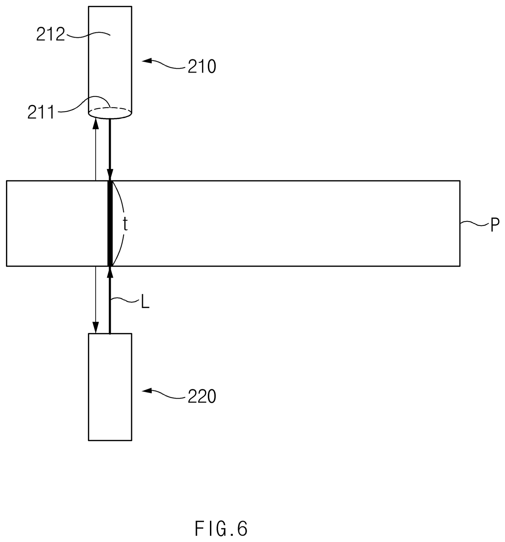

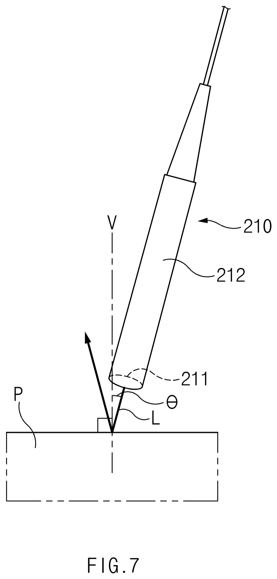

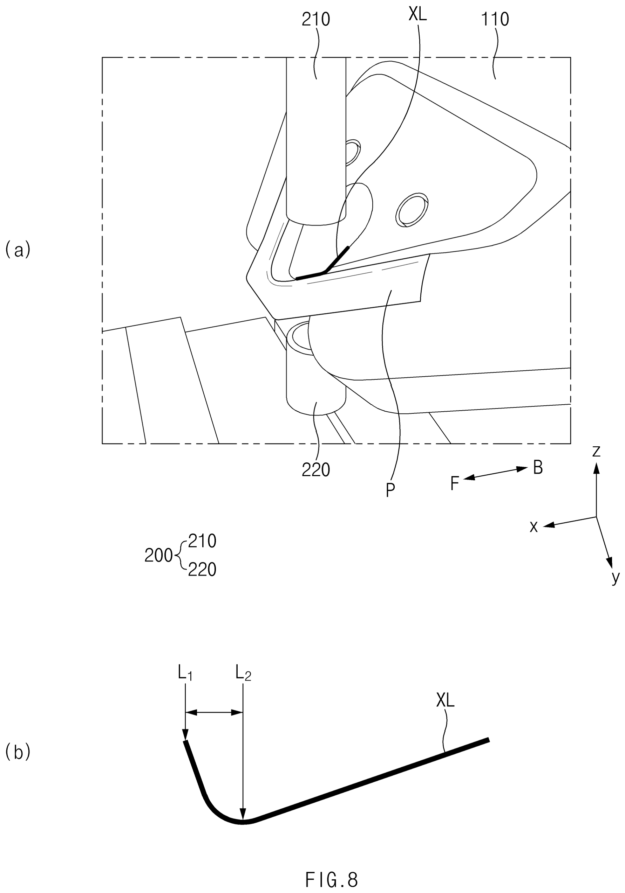

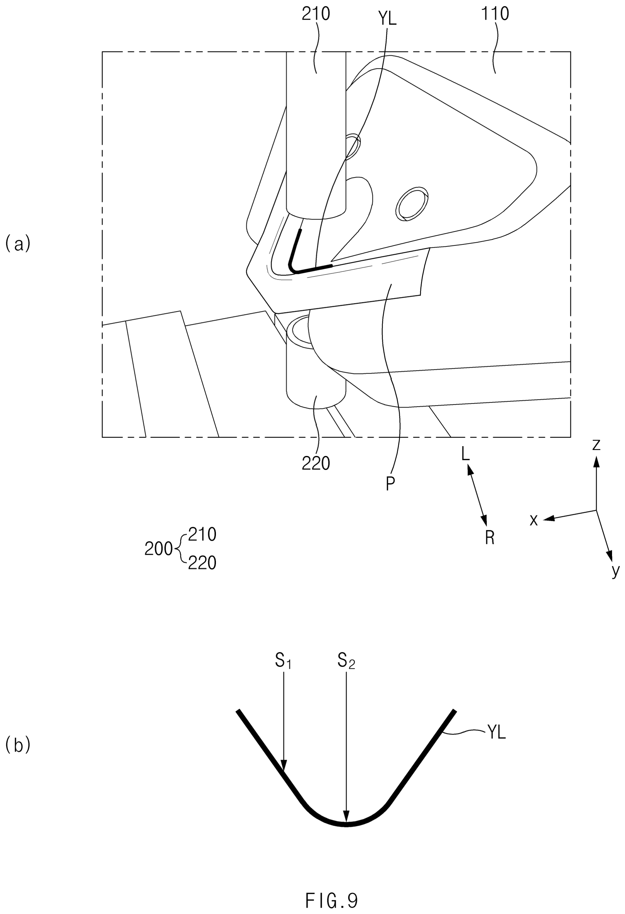

FIG. 3 is a perspective view of a thickness measurement system according to Embodiment 1 of the present invention. FIG. 4 is an enlarged perspective view of a portion A of FIG. 3. FIG. 5 is a cross-sectional view illustrating a state in which light emitted from a displacement sensor is incident vertically into a surface of an object. FIG. 6 is a cross-sectional view illustrating a state in which a thickness value of a pouch is measured in the state of FIG. 5. FIG. 7 is a cross-sectional view illustrating a state in which the light emitted from the displacement sensor is incident obliquely into the surface of the object. FIG. 8(a) is a perspective view illustrating a state in which a moving part moves a seating part along an x-axis. FIG. 8(b) is a conceptual view illustrating a process of searching a position of a pouch corner portion while the seating part moves along the x-axis. FIG. 9(a) is a perspective view illustrating a state in which a moving part moves a seating part along an x-axis. FIG. 9(b) is a conceptual view illustrating a process of searching a position of the pouch corner portion while the seating part moves along a y-axis.

Referring to FIGS. 3 and 4, a thickness measurement system 10 according to Embodiment 1 of the present invention include a stage device 100, a displacement sensor device 200, and a processing device (not shown).

Here, the stage device 100 includes a seating part 110 and a moving part 120. The seating part 110 may be configured to seat an object P of which a thickness is to be measured. Here, the object P may be a secondary battery pouch. The secondary battery pouch may be provided in a multi-layer structure. When a side at which the electrode assembly accommodated in a pouch is disposed is referred to as an inner side, the pouch may have a three-layered structure of a polypropylene (PP) layer, an aluminum (Al) layer, and a polyethylene terephthalate (PET) from the innermost side. Alternatively, the pouch may have a structure of a polypropylene (PP) layer, an aluminum (Al) layer, a polyethylene terephthalate (PET), and a nylon (Ny) layer. The thickness measurement system 10 according to the present invention may measure a thickness of the entire pouch, which is the entire multi-layer structure, or may measure a thickness of only one layer within the multi-layer structure. For example, the thickness may be measured only for the aluminum layer within the pouch layer. Light L used when measuring the thickness may be a laser or infrared ray, and the light L having various wavelengths may be used as needed. The seating part 110 may be a portion at which the object pouch P is seated. The pouch may be provided with a cup part in which the electrode assembly is accommodated. In order to seat the cup part-shaped pouch, the seating part 110 may be provided with a recessed groove. The recessed groove may have a shape corresponding to the pouch cup part.

The moving part 120 may be configured to move the seating part 110. The moving part 120 may move the seating part 110 in a straight line. It may move in the straight line to a position at which the thickness is measured. To measure the thickness, a displacement sensor disposed at one side of the object (or pouch) P and a displacement sensor disposed at the other side are used, and the moving part 120 may allow the seating part 110 to be disposed between the two displacement sensors.

The displacement sensor device 200 may be a device for measuring the thickness of the object P. The displacement sensor device 200 may measure the thickness of the object P using the light L. The displacement sensor device 200 may include a first displacement sensor 210 and a second displacement sensor 220. The first displacement sensor 210 may be a sensor disposed at one side of the object P to measure a distance to the object P. The first displacement sensor 210 may be a sensor disposed at the other side of the object P to measure a distance to the object P. Referring to FIG. 4, the first displacement sensor 210 may be disposed at an upper side of the pouch cup part of the object P, and the second displacement sensor 220 may be disposed at a lower side of the pouch cup part. In addition, the first displacement sensor 210 may radiate the light L to a top surface of the pouch cup part, and the second displacement sensor 220 may irradiate the light L to a bottom surface of the pouch cup part. For this, the moving part 120 may move the pouch P, which is an object, so that the pouch P is disposed between the first displacement sensor 210 and the second displacement sensor 220.

Particularly, the first displacement sensor 210 and the second displacement sensor 220 may be disposed at one side and the other side of the curved surface, respectively, to measure a portion of the curved surface of the pouch, which is the object P. Referring to FIG. 4, the first displacement sensor 210 and the second displacement sensor 220 may measure a thickness of the corner portion at a position corresponding to a vertex C of the pouch cup part. For this, the seating part 110 may be inclined so that the posture of the seating part 110 has a certain inclination. In addition, the seating part 110 may move the pouch P to a position at which a virtual straight line connecting the first displacement sensor 210 to the second displacement sensor 220 passes through the pouch corner portion.

Each of the first displacement sensor 210 and the second displacement sensor 220 may emit the light L, and the emitted light L may be bumped against the surface of the pouch, which is the object P, to return to each displacement sensor. In this process, a distance between each of the displacement sensors and the pouch surface is measured. That is, both the distance between the first displacement sensor 210 and the pouch and the distance between the second displacement sensor 220 and the pouch may be obtained.

The processing device (not shown) may be a device that obtains the thickness value of the object P based on the measured values of the first displacement sensor 210 and the second displacement sensor 220. Since the distance between the first displacement sensor 210 and the second displacement sensor 220 is a known value, the processing device may obtain the thickness measurement value of the object P by sequentially subtracting the distance from the first displacement sensor 210 to the pouch and the distance from the second displacement sensor 220 to the pouch from the distance between the two sensors.

In addition, referring to FIGS. 5 to 7, in the thickness measurement system 10 according to Embodiment 1 of the present invention, the displacement sensor device 200 may measure the thickness only when an incident angle θ between the light L emitted from the first displacement sensor 210 or the second displacement sensor 220 and a normal line V perpendicular to the surface of the object P that is an object to be measured is within a predetermined angle, and the displacement sensor device 200 may not measure the thickness when the incident angle θ is out of the predetermined angle.

Referring to FIG. 5, at least one of the first displacement sensor 210 or the second displacement may include a light receiving lens L and a sensor body 212. The light receiving lens 211 may be a lens that receives the reflected light L reflected from the object P. The light receiving lens 211 may be mounted on a lower portion of the sensor body 212, and the sensor body 212 may be a portion into which the light L passing through the light receiving lens 211 is incident. The sensor body 212 may have a cylindrical shape.

When the incident angle θ is within a predetermined angle, the reflected light L may be incident into the light receiving lens 211 and the sensor body 212. Here, the predetermined angle may have a value between 0° and 1° (degree). FIG. 5 illustrates a case in which the incident angle is 0 degree. Thus, in this case, the light L emitted from the first displacement sensor 210 collides with the surface of the object P and then is reflected to return to the light receiving lens 211. Then, the light L passes through the light receiving lens 211 to return to the sensor body 212. In this case, the distance value between the first displacement sensor 210 and the surface of the object P may be measured.

Referring to FIG. 6, in the thickness measurement system 10 according to Embodiment 1 of the present invention, when the incident angle θ is 0 degree or within the predetermined angle, the light L emitted from the first displacement sensor 210 may collide with the top surface of the object P and then be reflected to return to the light receiving lens 211 and the sensor body 212, and also, the light L emitted from the second displacement sensor 220 may collide with the bottom surface of the object P and then be reflected to return to the light receiving lens 211 and the sensor body 212. In this case, the thickness t of the pouch may be measured without errors. Here, being measured without the errors may mean being measured accurately to a level required for industry. An interferometric sensor may be used as an example of the displacement sensor used therein.

Referring to FIG. 7, in the thickness measurement system 10 according to Embodiment 1 of the present invention, when the incident angle θ is greater than the predetermined angle, i.e., when the incident angle is out of the predetermined angle, the reflected light L may not be incident into the light receiving lens 211 and the sensor body 212. The light L emitted from the first displacement sensor 210 may collide with the top surface of the object P and then be reflected so as not to return to the light receiving lens 211 and the sensor body 212. The light L emitted from the second displacement sensor 220 may collide with the bottom surface of the object P and then be reflected so as not to return to the light receiving lens 211 and the sensor body 212. In this case, the measured value may not be obtained from at least one of the first displacement sensor 210 or the second displacement sensor 220.

Even in this case, if the measured value is obtained from the first displacement sensor 210 and the second displacement sensor 220, an inaccurate value 't' having an error may be measured. Here, the value t' would have been measured as t/cosθ, which is a larger value than a value t, that is an actual thickness of the pouch, as described above. However, the thickness measurement system 10 according to Embodiment 1 of the present invention does not derive a measured value in this inaccurate case. The thickness measurement system 10 according to Embodiment 1 of the present invention may remove the errors based on this principle.

The predetermined angle described above may vary depending on a size of a diameter of the light receiving lens 211. When the diameter of the light receiving lens 211 is large, the predetermined angle may become larger, and as the diameter of the light receiving lens 211 becomes smaller, the predetermined angle may become smaller. In the thickness measurement system 10 according to Embodiment 1 of the present invention, the predetermined angle may have a value between 0° and 1° (degrees), and thus, the thickness value of the pouch may be measured with the error that are significantly removed.

According to this principle, the processing device may obtain the thickness value of the object P only when the incident angle is within a predetermined angle, and when the thickness value is out of the predetermined angle, the processing device may not obtain the thickness value of the object P.

As described above, the thickness measurement system 10 of the present invention may significantly reduce the measurement errors due to the positional relationship between the object P to be measured and the sensor when measuring the thickness of the pouch, and in particular, significantly reduce the thickness measurement errors at the corner portion of the pouch, which is provided as the curved surface having the various curvatures.

Referring to FIG. 3, the thickness measurement system 10 according to Embodiment 1 of the present invention may further include a sensor gauge 400. At least one of the first displacement sensor 210 or the second displacement sensor 220 may move upward or downward. More specifically, the sensor gauge may include an upper sensor gauge 410 and a lower sensor gauge 420. The upper sensor gauge 410 may move the first displacement sensor 210 in the vertical direction. In addition, the lower sensor gauge 420 may move the second displacement sensor 220 in the vertical direction.

Referring to FIG. 3, in the thickness measurement system 10 according to Embodiment 1 of the present invention, the moving part 120 may further include a linear moving part 121. The linear moving part 121 may be configured to move the seating part 110 in x-axis, y-axis, and z-axis directions, which are three axes orthogonal to each other in a three-dimensional space. In addition, the moving part 120 may include a posture control panel 123. Here, the posture control panel 123 may be configured so that one side thereof is connected to the seating part 110, and the other side thereof extends in a direction away from the displacement sensor device 200. The linear moving part 121 may be connected to the posture control panel 123 to move the posture control panel 123 in the x-axis, y-axis, and z-axis directions, thereby moving the seating part 110 in the x-axis, y-axis, and z-axis directions. The posture control panel 123 may be configured to move the seating part 110 while stably supporting the seating part 110. In addition, a point at which the seating part 110 is seated and a component that moves the seating part 110 may be configured to be spaced a predetermined distance from each other. As a result, a place on which the seating part is seated may be sufficiently secured.

Specifically, the linear moving part 121 may include a pillar portion 124, an x-axis gauge 121-1, a y-axis gauge 121-2, and a z-axis gauge 121-3. The pillar portion 124 may be connected to the other side of the posture control panel 123 to support the other side. The x-axis gauge 121-1 may include a screw structure and may be a gauge configured to move the pillar portion 124 to the x-axis. The y-axis gauge 121-2 may include a screw structure and may be a gauge configured to move the pillar portion 124 to the y-axis. In addition, the z-axis gauge 121-3 may include a screw structure and may be a gauge configured to move the pillar portion 124 to the z-axis.

When the x-axis gauge 121-1 moves the pillar portion 124 along the x-axis, the pillar portion 124 may move the posture control panel 123 connected to the pillar portion 124 along the x-axis, and thus, the seating part 110 seated on the posture control panel 123 may move along the x-axis.

In the manner, when the y-axis gauge 121-2 moves the pillar portion 124 along the y-axis, the pillar portion 124 may move the posture control panel 123 connected to the pillar portion 124 along the y-axis, and thus, the seating part 110 seated on the posture control panel 123 may move along the y-axis.

The z-axis gauge 121-3 may also operate in the same manner. When the z-axis gauge 121-3 moves the pillar portion 124 along the z-axis, the pillar portion 124 may move the posture control panel 123 connected to the pillar portion 124 along the z-axis, and thus, the seating part 110 seated on the posture control panel 123 may move along the z-axis.

The light L emitted from the displacement sensor may be adjusted to be accurately disposed at the corner portion of the pouch through the x-axis gauge 121-1, the y-axis gauge 121-2, and the z-axis gauge 121-3.

FIG. 8(a) is a perspective view illustrating a state in which the moving part 120 moves the seating part 110 along the x-axis. FIG. 8(b) is a conceptual view illustrating a process of searching a position of the pouch corner portion while the seating part 110 moves along the x-axis.

In FIG. 8(a), a state in which the seating part 110 move in F and B directions along the x-axis. In this case, the light L emitted from the first displacement sensor 210 may draw a trace on the surface of the pouch. In FIGS. 8(a) (b), an x-axis light irradiation line drown by the light L emitted from the first displacement sensor 210 is illustrated as XL on the surface of the pouch that is the object P. Referring to FIG. 8(b), as the seating part 110 moves along the x-axis, a displacement measured by the first displacement sensor 210 gradually increases to be changed from L1 to L2. In addition, as soon as the first displacement sensor 210 passes through L2, the displacement measured by the first displacement sensor 210 gradually decreases. In this case, the largest displacement (i.e., when a distance from the first displacement sensor 210 to the surface of the pouch is largest) becomes an x-axis position of the pouch corner portion C, and thus, the x-axis gauge 121-1 may be adjusted so that the seating part 110 is stopped at the largest displacement.

FIG. 9(a) is a perspective view illustrating a state in which the moving part moves the seating part along the y-axis. FIG. 9(b) is a conceptual view illustrating a process of searching a position of the pouch corner portion while the seating part 110 moves along the y-axis.

In FIG. 9(a), a state in which the seating part 110 moves in the L and R directions along the y-axis. In this case, the light L emitted from the first displacement sensor 210 may draw a trace on the surface of the pouch. In FIGS. 9(a) (b), a y-axis light irradiation line drown by the light L emitted from the first displacement sensor 210 is illustrated as YL on the surface of the pouch that is the object P. Referring to FIG. 9(b), as the seating part 110 moves along the y-axis, a displacement measured by the first displacement sensor 210 gradually increases to be changed from S1 to S2. In addition, as soon as the first displacement sensor 210 passes through L2, the displacement measured by the first displacement sensor 210 gradually decreases. In this case, the largest displacement (i.e., when a distance from the first displacement sensor 210 to the surface of the pouch is largest) becomes a y-axis position of the pouch corner portion, and thus, the y-axis gauge 121-2 may be adjusted so that the seating part 110 is stopped at the largest displacement.

In the case of the z-axis gauge 121-3, the pouch object P placed on the seating part 110 may be adjusted to be disposed between the first displacement sensor 210 and the second displacement sensor 220.

### Embodiment 2

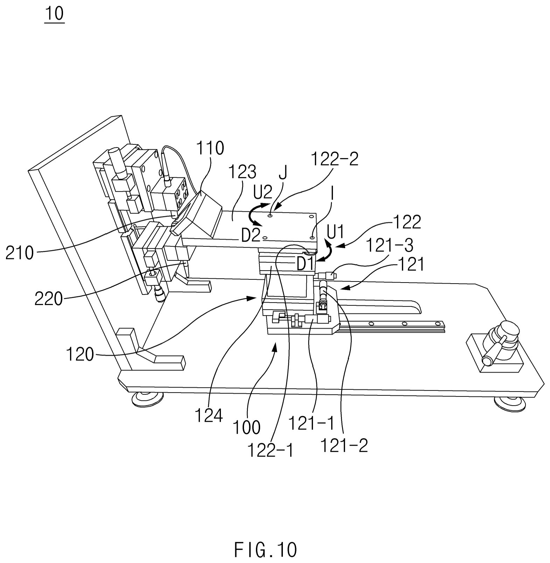

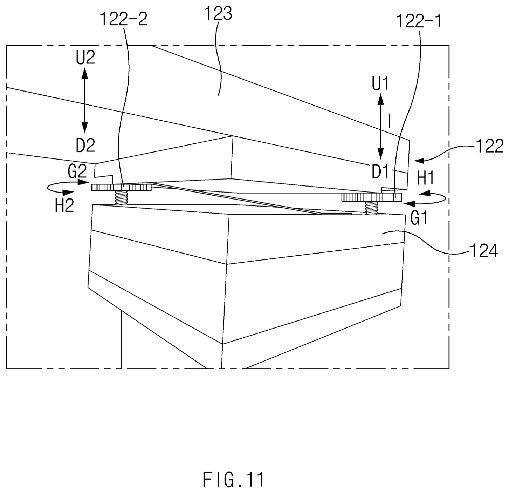

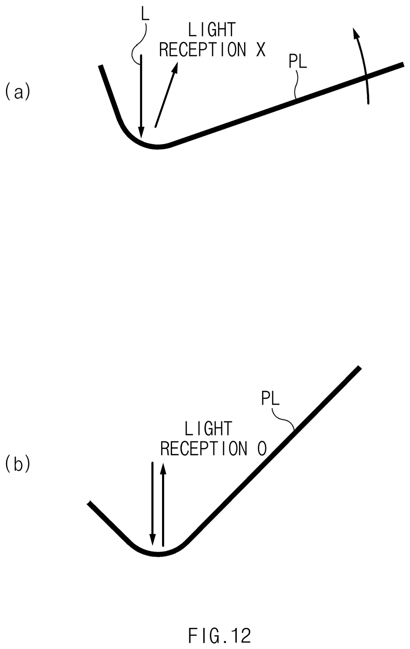

FIG. 10 is a perspective view of a thickness measurement system 10 according to Embodiment 2 of the present invention. FIG. 11 is a perspective view illustrating a state when viewing a rotational moving part 122 from a lower side of a posture control panel 123 of the thickness measurement system 10 according to Embodiment 2 of the present invention. FIG. 12 is a conceptual view illustrating a principle of measuring the thickness of the pouch corner portion while the seating part 110 rotatably moves by the rotational moving part 122.

Embodiment 2 of the present invention is different from Embodiment 1 in that it is the thickness measurement system 10 including the rotational moving part 122.

Contents in common with Embodiment 1 will be omitted as much as possible, and Embodiment 2 will be described focusing on differences. That is, it is obvious that if content that is not described in Embodiment 2 is needed, it may be regarded as the content of Embodiment 1.

Referring to FIG. 10, in the thickness measurement system 10 according to Embodiment 2 of the present invention, a moving part 120 may include a rotational moving part 122 that rotates the seating part 110 in a three-dimensional space. In addition, the moving part 120 may also include a posture control panel 123. The posture control panel 123 may have one side connected to the seating part 110 and the other side extending in a direction away from a displacement sensor device 200. Here, the rotational moving part 122 may be connected to the posture control panel 123 to rotate and move the seating part 110 by rotating and moving the posture control panel 123.

Specifically, referring to FIGS. 10 and 11, the rotational moving part 122 may include a pillar portion 124, a first gauge 122-1, and a second gauge 122-2.

The pillar portion 124 may be connected to the other side of the posture control panel 123 to support the other side, and a top surface of the pillar portion 124, which face the posture control panel 123, may have a square shape. The pillar portion 124 may have a square pillar shape with the square top surface.

The first gauge 122-1 may be installed on the pillar portion 124 and may be configured to move the posture control panel 123 upward or downward at a point corresponding to one corner portion of the square shape. In this case, the posture control panel 123 may move upward or downward using a principle of a screw.

Referring to FIGS. 10 and 11, the first gauge 122-1 may be disposed at a point I of the posture control panel 123. The point I may be a portion of the posture control panel 123 corresponding to one corner portion of the square-shaped portion corresponding to a top surface of the pillar portion 124. In addition, the first gauge 122-1 is connected to the point I. The first gauge 122-1 may have a screw shape on an outer surface thereof and be installed on the pillar portion 124.

In addition, when the first gauge 122-1 rotates in one direction H1, the first gauge 122-1 may push the point I of the posture control panel 123 upward U1. Conversely, if the first gauge 122-1 is turned in a direction G1 opposite to the one direction, the first gauge 122-1 may allow the point I of the posture control panel 123 to descend downward D1. In this manner, the first gauge 122-1 may rotate the posture control panel 123. That is, the posture control panel 123 may be fixed to a point J. However, the posture control panel 123 may operate by lifting only the point I, and thus, the posture control panel 123 may rotate.

When the posture control panel 123 rotates, the seating part 110 installed on the posture control panel 123 may also rotate. As the seating part 110 rotates, the pouch object P may also rotate.

The second gauge 122-2 may be installed on the pillar portion 124 and may be configured to move the posture control panel 123 upward or downward at a point corresponding to a corner portion opposite to the position at which the first gauge 122-1 having the square shape is installed.

Referring to FIGS. 10 and 11, the first gauge 122-2 may be disposed at the point J of the posture control panel 123. The point J may be a portion of the posture control panel 123 corresponding to the other corner portion of the square-shaped portion corresponding to the top surface of the pillar portion 124. In addition, the second gauge 122-2 is connected to the point J. The second gauge 122-2 may have a screw shape on an outer surface thereof and be installed on the pillar portion 124.

In addition, when the second gauge 122-2 rotates in one direction H2, the second gauge 122-2 may push the point J of the posture control panel 123 upward U2. Conversely, if the second gauge 122-2 is turned in a direction G2 opposite to the one direction, the second gauge 122-2 may allow the point J of the posture control panel 123 to descend downward D2. In this manner, the second gauge 122-2 may rotate the posture control panel 123. When the posture control panel 123 rotates, the seating part 110 installed on the posture control panel 123 may also rotate. As the seating part 110 rotates, the pouch object P may also rotate.

FIGS. 12(a) (b) illustrates a configuration in which, when the seating part 110 rotates and moves by the first gauge 122-1 or the second gauge 122-2, light L emitted from the first displacement sensor 210 is reflected from a pouch surface PL. FIG. 12(a) illustrates a state in which the light L emitted from the first displacement sensor 210 is reflected from the pouch surface PL and then is not received again.

In this state, when the object P rotates by the first gauge 122-1 or the second gauge 122-2, it may be in a state illustrated in FIG. 12(b). In this case, an incident angle θ of the light L emitted from the first displacement sensor 210 may be within a predetermined angle. Thus, the light L reflected from the pouch surface PL may be received L into a sensor body 212 through a light receiving lens 211. In this case, sufficiently accurate thickness measurement values may be measured without errors. If there is an error, the thickness measurement value may not be measured, and thus, the thickness measurement value with the errors may be removed.

As described above, the thickness measurement system of the present invention may significantly reduce the measurement errors due to the positional relationship between the object to be measured and the sensor when measuring the thickness of the pouch, and in particular, significantly reduce the thickness measurement errors at the corner portion of the pouch, which is provided as the curved surface having the various curvatures.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Thickness measurement system
100: Stage device
110: Seating part
120: Moving part
121: Linear moving part
121-1: x-axis gauge
121-2: y-axis gauge
121-3: z-axis gauge
122: Rotational moving part
122-1: First gauge
122-2: Second gauge
123: Posture control panel
124: Pillar portion
200: Displacement sensor device
210: First displacement sensor
211: Light receiving lens
212: Sensor body
220: Second displacement sensor
L: Light
P: Object
XL: X-axis irradiation line on object surface
YL: Y-axis irradiation line on object surface
PL: Pouch surface line

## Claims

1. A thickness measurement system comprising:
a stage device comprising a seating part, on which an object, of which a thickness is to be measured, is seated, and a moving part configured to move the seating part;
a displacement sensor device comprising a first displacement sensor disposed at one side of the object to measure a distance up to the object and a second displacement sensor disposed at the other side of the object to measure a distance up to the object; and
a processing device configured to obtain a thickness value of the object based on the measured values of the first displacement sensor and the second displacement sensor,
wherein the displacement sensor device performs the measurement only when an incident angle, which is an angle between the light emitted from the first displacement sensor or the second displacement sensor and a normal line perpendicular to a surface of the object to be measured, is within a predetermined angle, and does not perform the measurement when the incident angle is out of the predetermined angle.

2. The thickness measurement system of claim 1, wherein the first displacement sensor and the second displacement sensor are disposed at one side and the other side of a curved surface, respectively, to measure a point of the curved surface of the object.

3. The thickness measurement system of claim 1, wherein at least one of the first displacement sensor or the second displacement sensor comprises:
a light receiving lens configured to receive the reflected light reflected from the surface of the object; and
a sensor body on which the light receiving lens is mounted and into the light passing through the light receiving lens is incident,
wherein, when the incident angle is within the predetermined angle, the reflected light is incident into the light receiving lens and the sensor body, and
when the incident angle is out of the predetermined angle, the reflected light is not incident into the light receiving lens and the sensor body.

4. The thickness measurement system of claim 3, wherein the predetermined angle becomes smaller as a diameter of the light receiving lens decreases.

5. The thickness measurement system of claim 4, wherein the predetermined angle has a value between 0° and 1° (degree).

6. The thickness measurement system of claim 1, wherein the processing device obtains the thickness value of the object only when the incident angle is within the predetermined angle and does not obtain the thickness value of the object when the incident angle is out of the predetermined angle.

7. The thickness measurement system of claim 1, further comprising a sensor gauge configured to move at least one of the first displacement sensor or the second displacement sensor upward or downward.

8. The thickness measurement system of claim 1, wherein the moving part comprises a linear moving part configured to move the seating part in x-axis, y-axis, and z-axis directions, which are three axes orthogonal to each other in a three-dimensional space.

9. The thickness measurement system of claim 8, wherein the moving part comprises a posture control panel having one side connected to the seating part and the other side extending in a direction away from the displacement sensor device, and
the linear moving part is connected to the posture control panel to move the posture control panel in the x-axis, the y-axis, and z-axis directions so that the seating part moves in the x-axis, y-axis, and z-axis directions.

10. The thickness measurement system of claim 9, wherein the linear moving part comprises:
a pillar portion connected to the other side of the posture control panel to support the other side;
an x-axis gauge comprising a screw structure and configured to move the pillar portion to the x-axis;
a y-axis gauge comprising a screw structure and configured to move the pillar portion to the y-axis; and
a z-axis gauge comprising a screw structure and configured to move the pillar portion to the z-axis.

11. The thickness measurement system of any one of claim 1 or 8, wherein the moving part comprises a rotational moving part configured to rotate and move the seating part in the three-dimensional space.

12. The thickness measurement system of claim 11, wherein the moving part comprises a posture control panel having one side connected to the seating part and the other side extending in a direction away from the displacement sensor device, and
the rotational moving part is connected to the posture control panel to rotate and move the seating part as the posture control panel rotates and moves.

13. The thickness measurement system of claim 12, wherein the rotational moving part comprises:
a pillar portion connected to the other side of the posture control panel to support the other side and having a square top surface facing the posture control panel;
a first gauge installed on the pillar portion and configured to move the posture control panel upward or downward at a point corresponding to one corner portion of the square shape; and
a second gauge installed on the pillar portion and configured to move the posture control panel upward or downward at a point corresponding to a corner portion opposite to the position, at which the first gauge is installed, in the square shape.
